# EUROPÄISCHE PATENTSCHRIFT

(11) **EP 1 827 891 B1**
(45) Veröffentlichungstag und Bekanntmachung des Hinweises auf die Patenterteilung: **01.04.2009**
(21) Anmeldenummer: 05850268.3
(22) Anmeldetag: 14.12.2005
(51) Int. Cl.: B60K 17/10, B60K 17/356

(54) **HYDROSTATISCHER FAHRANTRIEB MIT DIFFERENTIALSPERRWIRKUNG**
HYDROSTATIC DRIVE WITH A DIFFERENTIAL BLOCKING ACTION
SYSTEME D'ENTRAINEMENT HYDROSTATIQUE A ACTION DE BLOCAGE DU DIFFERENTIEL

(30) Priorität: 21.12.2004 DE 102004061557
(43) Veröffentlichungstag der Anmeldung: 05.09.2007
(73) Patentinhaber: Brueninghaus Hydromatik GmbH, 89275 Elchingen (DE)
(72) Erfinder: VOGL, Karl-Heinz, 88444 Ummendorf (DE); ESSIG, Heinz-Gerhard, 89173 Lonsee (DE)
(74) Vertreter: Körfer, Thomas
(86) Internationale Anmeldenummer: PCT/EP2005/013435
(87) Internationale Veröffentlichungsnummer: WO 2006/066771

(56) Entgegenhaltungen:
- EP-A- 0 012 902
- EP-A- 0 025 372
- EP-A- 1 100 691
- WO-A-01/51303
- WO-A-20/05053989
- DE-A1- 10 032 514
- US-A1- 2004 216 456

## Beschreibung

Die Erfindung betrifft einen hydrostatischen Fahrantrieb mit zumindest zwei Hydropumpen und vier Hydromotoren mit Differenzialsperrwirkung, entsprechend dem Oberbegriff des Anspruchs 1.

Ein hydrostatischer Fahrantrieb, bei dem vier Hydromotoren durch zwei Verstellpumpen angetrieben werden, ist aus der DE 198 33 942 A1 bekannt. Sowohl die Hydromotoren als auch die Hydropumpen weisen jeweils einen ersten Anschluss und einen zweiten Anschluss auf. Ausgehend von dem ersten Anschluss der ersten Hydropumpe werden zwei der Hydromotoren über ihren ersten Anschluss als Eingang mit Druckmittel beaufschlagt. Die Ausgänge dieser beiden Hydromotoren sind jedoch nicht mit dem zweiten Anschluss der ersten Hydropumpe, sondern mit dem zweiten, als Eingang der zweiten Hydropumpe wirkenden Anschluss verbunden. Deren Ausgang ist wiederum mit den als Eingang wirkenden Anschlüssen der beiden anderen Hydromotoren verbunden. Die Ausgänge der beiden letztgenannten Hydromotoren sind dagegen mit dem zweiten Anschluss der ersten Hydropumpe verbunden. Es entsteht damit ein geschlossener hydraulischer Kreislauf, bei dem jeweils eine Förderfolge Pumpe - Motor - Pumpe - Motor - Pumpe realisiert ist.

Durch diese sogenannte Kreuzschaltung der Hydromotoren mit den Hydropumpen wird erreicht, dass sich ein schneller drehender Hydromotor an derjenigen Hydropumpe abstützen muss, die den betreffenden Hydromotor nicht mit Druckmittel versorgt. Wegen der Ölmengenbilanz in dem geschlossenen Kreislauf ergibt sich damit ein Zwangslauf der einzelnen Hydromotoren.

An dem beschriebenen Fahrantrieb müssen die Hydromotoren aufgrund der starren Ölmengenbilanz hinsichtlich ihres Schluckvolumens exakt identisch eingestellt werden. In der praktischen Anwendung kommen daher im Prinzip nur Konstantmotoren in Betracht, bei denen eine entsprechend exakte Einstellung der jeweiligen Schluckvolumina möglich ist.

Aus der gattungsgemäßen EP 1 100 691 B1, dort in Fig. 4 gezeigt, ist ein hydrostatischen Fahrantrieb mit zumindest einer ersten und einer zweiten Hydropumpe, einen ersten, einen zweiten, einen dritten und einen vierten Hydromotor bekannt, wobei jeder Hydromotor zwei mechanisch starr miteinander gekoppelte Teil-Hydromotoren umfasst und ein erster Anschluss der ersten Hydropumpe mit einem ersten Anschluss des ersten Hydromotors und einem ersten Anschluss des dritten Hydromotors verbunden ist und ein erster Anschluss der zweiten Hydropumpe mit einem ersten Anschluss des zweiten Hydromotors und einem ersten Anschluss des vierten Hydromotors verbunden ist und ein zweiter Anschluss des ersten Hydromotors und ein zweiter Anschluss des vierten Hydromotors mit einem zweiten Anschluss der zweiten Hydropumpe verbunden ist und ein zweiter Anschluss des zweiten Hydromotors und ein zweiter Anschluss des dritten Hydromotors mit einem zweiten Anschluss der ersten Hydropumpe verbunden ist und jeder Hydromotor jeweils ein separates Antriebsrad antreibt.

Es ist die Aufgabe der Erfindung, einen hydrostatischen Fahrantrieb mit einer Differenzialsperrwirkung zu schaffen, bei dem eine individuelle Anpassung der Schwenkwinkel der Hydromotoren möglich ist.

Die Aufgabe wird durch den erfindungsgemäßen hydrostatischen Fahrantrieb mit den Merkmalen des Anspruchs 1 gelöst.

Der erfindungsgemäße hydrostatische Fahrantrieb weist zumindest zwei Hydropumpen sowie vier Hydromotoren auf. Die Hydropumpen sowie die Hydromotoren weisen jeweils einen ersten Anschluss und einen zweiten Anschluss auf. Mit dem ersten Anschluss der ersten Hydropumpe ist jeweils der erste Anschluss des ersten und des dritten Hydromotors verbunden. Der erste Anschluss der zweiten Hydropumpe ist dagegen mit dem ersten Anschluss des zweiten und des vierten Hydromotors verbunden.

Der zweite Anschluss der ersten Hydropumpe ist mit dem zweiten Anschluss des zweiten Hydromotors und dem zweiten Anschluss des dritten Hydromotors verbunden. Der zweite Anschluss der zweiten Hydropumpe ist dagegen mit dem zweiten Anschluss des ersten Hydromotors und dem zweiten Anschluss des vierten Hydromotors verbunden. Damit sind der dritte und der vierte Hydromotor jeweils nur einer Hydropumpe zugeordnet und bilden mit diesen jeweils einen konventionellen Kreislauf.

Der erste und der zweite Hydromotor sind dagegen in einer sogenannten Kreuzschaltung angeordnet. In einer Kreuzschaltung wird das Druckmittel in der Reihenfolge Pumpe - Hydromotor - Pumpe - Hydromotor gefördert.

Durch diese Kombination, in der zwei der Hydromotoren in Kreuzschaltung mit den beiden Hydropumpen verbunden sind, die anderen beiden Hydromotoren dagegen konventionell jeweils einer Hydropumpe zugeordnet sind, ergibt sich eine nicht vollkommen starre Ölmengenbilanz. Dies hat den Vorteil, dass die Übereinstimmung der Schwenkwinkel der Hydromotoren unkritisch ist und zum Beispiel lastdruckabhängig verstellt werden kann.

Eine exakte Identität der Schluckvolumina der Hydromotoren untereinander ist nicht erforderlich. Gleichzeitig bleibt eine Differenzialsperrwirkung erhalten, weil zwei der Hydromotoren durch eine Kreuzverschaltung so angeordnet sind, dass sie sich auf der jeweils den anderen Hydromotor bedrückenden Hydropumpe abstützen müssen.

In den Unteransprüchen sind vorteilhafte Weiterbildungen des erfindungsgemäßen hydrostatischen Fahrantriebs dargestellt.

Insbesondere ist es vorteilhaft, den ersten und den zweiten Hydromotor einer Fahrzeugachse zuzuordnen. Damit werden die beiden angetriebenen Räder einer Fahrzeugachse mit jeweils einem in Kreuzverschaltung beaufschlagten Hydromotor verbunden.

Insbesondere ist es auch vorteilhaft, den dritten und den vierten Hydromotor einer anderen Fahrzeugachse gemeinsam zuzuordnen. Bei Fahrzeugen, die eine stark bevorzugte Fahrtrichtung aufweisen, ergibt sich damit eine bevorzugte Symmetrie, wobei sich kein Einfluss des Fahrantriebs bei Kurvenfahrt ergibt.

In einer anderen Anordnung kann es vorteilhaft sein, dass das Fahrzeug insbesondere bezüglich der Fahrtrichtungen vorwärts und rückwärts eine erhöhte Symmetrie aufweist. Hierzu ist es insbesondere vorteilhaft, den ersten und den zweiten Hydromotor einer Fahrzeugseite zuzuordnen. So können beispielsweise der erste und der zweite Hydromotor jeweils mit der rechten Fahrzeugseite verbunden sein.

Ein bevorzugtes Ausführungsbeispiel des erfindungsgemäßen hydrostatischen Fahrantriebs ist in der Zeichnung dargestellt und wird in der nachfolgenden Beschreibung näher erläutert. Es zeigen:

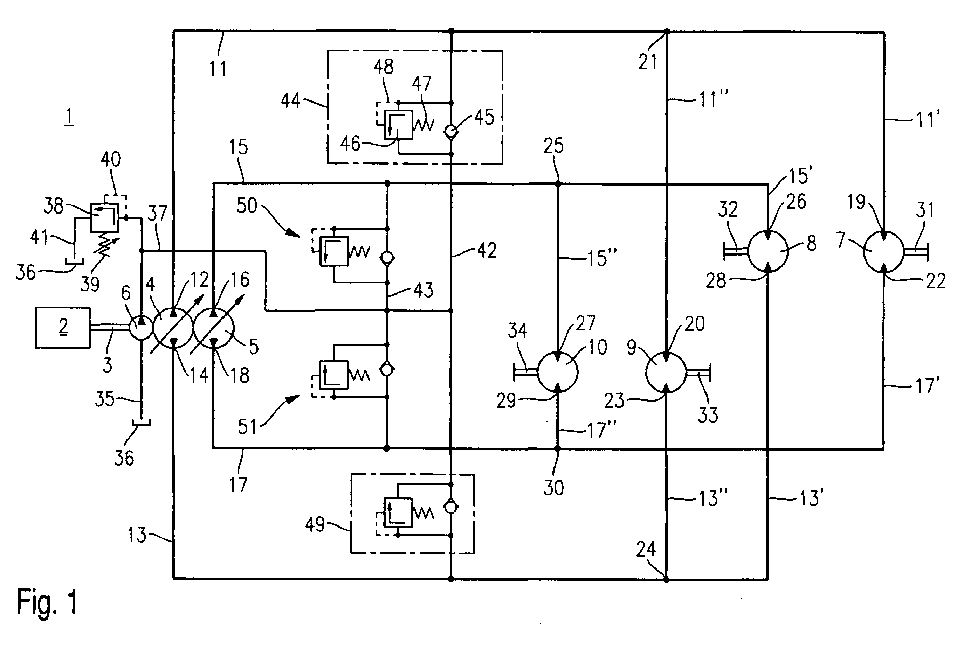

- Fig. 1: ein bevorzugtes Ausführungsbeispiel eines erfindungsgemäßen hydrostatischen Fahrantriebs.

In der Fig. 1 ist ein hydraulischer Schaltplan eines erfindungsgemäßen hydrostatischen Fahrantriebs 1 dargestellt. Der hydrostatische Fahrantrieb 1 umfasst eine Antriebsmaschine 2, die über eine Antriebswelle 3 mit einer ersten Hydropumpe 4 und einer zweiten Hydropumpe 5 gekoppelt ist. Die beiden Hydropumpen 4 und 5 sind für eine Förderung in zwei Richtungen ausgelegt und können in ihrem Fördervolumen verstellt werden. Hierzu werden die beiden Stellmechanismen der ersten Hydropumpe 4 und der zweiten Hydropumpe 5 über eine nicht dargestellte Verstellvorrichtung betätigt.

Die erste Hydropumpe 4 und die zweite Hydropumpe 5 werden vorzugsweise durch dieselbe Antriebswelle 3 angetrieben, wobei zusätzlich durch die Antriebswelle 3 eine Speisepumpe 6 angetrieben wird. Die Speisepumpe 6 ist bevorzugt eine Konstantpumpe und kann Druckmittel lediglich in eine Richtung fördern.

Zum Antrieb eines Fahrzeugs, welches zumindest vier angetriebene Räder aufweist, sind in dem hydrostatischen Fahrantrieb 1 zumindest ein erster Hydromotor 7, ein zweiter Hydromotor 8, ein dritter Hydromotor 9 sowie ein vierter Hydromotor 10 vorgesehen. In dem in der Fig. 1 dargestellten Ausführungsbeispiel sollen der erste Hydromotor 7 gemeinsam mit dem zweiten Hydromotor 8 die Räder der Vorderachse antreiben. Der dritte Hydromotor 9 treibt ebenso wie der vierte Hydromotor 10 die Räder der Hinterachse des Fahrzeugs an.

Die erste Hydropumpe 4 fördert ihr Druckmittel in eine erste Arbeitsleitung 11. Die erste Arbeitsleitung 11 ist hierzu mit einem ersten Anschluss 12 der ersten Hydropumpe 4 verbunden.

Für die nachfolgenden Erläuterungen wird davon ausgegangen, dass die erste Hydropumpe 4 ihr Druckmittel über ihren ersten Anschluss 12 in die erste Arbeitsleitung 11 fördert. Der Rückfluss von Druckmittel zu der ersten Hydropumpe 4 erfolgt über eine zweite Arbeitsleitung 13, die mit einem zweiten Anschluss 14 der ersten Hydropumpe 4 verbunden ist.

Entsprechend fördert in dem dargestellten Ausführungsbeispiel die zweite Hydropumpe 5 ihr Druckmittel in eine dritte Arbeitsleitung 15, die mit der zweiten Hydropumpe 5 an deren erstem Anschluss 16 verbunden ist. Das zu der zweiten Hydropumpe 5 zurückströmende Druckmittel fließt über eine vierte Arbeitsleitung 17 zu einem zweiten Anschluss 18 der zweiten Hydropumpe 5.

Die erste Arbeitsleitung 11 verzweigt sich an einem ersten Verzweigungspunkt 21 in einen ersten Abschnitt 11' und einen zweiten Abschnitt 11" der ersten Arbeitsleitung 11. Der erste Abschnitt 11' der ersten Arbeitsleitung 11 ist an einen ersten Anschluss 19 des ersten Hydromotors 7 angeschlossen. Der zweite Abschnitt 11" der ersten Arbeitsleitung 11 ist mit einem ersten Anschluss 20 des dritten Hydromotors 9 verbunden.

Der erste Hydromotor 7 und der dritte Hydromotor 9 werden daher von der ersten Hydropumpe 4 mit Druckmitteln beaufschlagt.

Die mit dem ersten Anschluss 16 der zweiten Hydropumpe 5 verbundene dritte Arbeitsleitung 15 verzweigt sich an einem dritten Verzweigungspunkt 25 in einen ersten Abschnitt 15' und einem zweiten Abschnitt 15'' der dritten Arbeitsleitung 15. Der erste Abschnitt 15' der dritten Arbeitsleitung 15 ist mit einem ersten Anschluss 26 des zweiten Hydromotors 8 verbunden. Dementsprechend ist der zweite Abschnitt 15 " der dritten Arbeitsleitung 15 mit einem ersten Anschluss 27 des vierten Hydromotors 10 verbunden.

Von der zweiten Hydropumpe 5 werden somit über die dritte Arbeitsleitung 15 der zweite Hydromotor 8 und der vierte Hydromotor 10 mit Druckmittel beaufschlagt.

Der zweite Anschluss 14 der ersten Hydropumpe 4 ist über die zweite Arbeitsleitung 13 sowie deren ersten Abschnitt 13' und zweiten Abschnitt 13" mit einem zweiten Anschluss 28 des zweiten Hydromotors 8 bzw. einem zweiten Anschluss 23 des dritten Hydromotors 9 verbunden. Der erste Abschnitt 13' und der zweite Abschnitt 13" der zweiten Arbeitsleitung 13 münden an einem zweiten Verzweigungspunkt 24 in die zweite Arbeitsleitung 13. Das durch den zweiten Hydromotor 8 sowie den dritten Hydromotor 9 strömende Druckmittel wird somit über die zweite Arbeitsleitung 13 der ersten Hydropumpe 4 an deren zweiten Anschluss 14 zugeführt, der bei der beschriebenen Förderrichtung die Saugseite der ersten Hydropumpe 4 bildet.

Das Zurückfließen von Druckmittel zu der zweiten Hydropumpe 5 erfolgt über die vierte Arbeitsleitung 17. Die vierte Arbeitsleitung 17 verzweigt sich an einem vierten Verzweigungspunkt 30 in einen ersten Abschnitt 17' und einen zweiten Abschnitt 17" der vierten Arbeitsleitung 17. Der erste Abschnitt 17' der vierten Arbeitsleitung 17 ist mit einem zweiten Anschluss 22 des ersten Hydromotors 7 verbunden. Der zweite Abschnitt 17'' der vierten Arbeitsleitung 17 ist mit einem zweiten Anschluss 29 des vierten Hydromotors 10 verbunden.

Das durch den ersten Hydromotor 7 und den vierten Hydromotor 10 geförderte Druckmittel fließt somit über den ersten Abschnitt 17' und den zweiten Abschnitt 17" der vierten Arbeitsleitung 17 zurück zu dem zweiten Anschluss 18 der zweiten Hydropumpe 5.

Bei der angenommenen Förderrichtung der ersten Hydropumpe 4 sowie der zweiten Hydropumpe 5 in die erste bzw. dritte Arbeitsleitung 11 bzw. 15 wird von der ersten Hydropumpe 4 der erste Hydromotor 7 und der dritte Hydromotor 9 mit Druckmittel beaufschlagt. Das durch den ersten Hydromotor 7 hindurchströmende Druckmittel fließt von dort zurück zu der zweiten Hydropumpe 5. Im weiteren Verlauf wird das Druckmittel von der zweiten Hydropumpe 5 zu dem zweiten Hydromotor 8 und dem vierten Hydromotor 10 gefördert. Das durch den zweiten Hydromotor 8 geförderte Druckmittel fließt zurück zur Saugseite der ersten Hydropumpe 4. Damit sind der erste und der zweite Hydromotor 7, 8 in einer sogenannten Kreuzschaltung mit beiden Hydropumpen 4, 5 verbunden.

Das von der ersten Hydropumpe 4 geförderte Druckmittel wird außer dem ersten Hydromotor 7 auch dem dritten Hydromotor 9 zugeführt. Das durch den dritten Hydromotor 9 strömende Druckmittel wird jedoch auch wieder über die zweite Arbeitsleitung 13 zu der ersten Hydropumpe 14 zurückgefördert. Der dritte Hydromotor 9 ist daher ausschließlich mit der ersten Hydropumpe 4 verbunden. Das von der zweiten Hydropumpe 5 neben dem zweiten Hydromotor 8 auch dem vierten Hydromotor 10 zugeführte Druckmittel, wird entsprechend vom Ausgang des vierten Hydromotors 10 zurück zur zweiten Hydropumpe 5 gefördert. Dementsprechend ist der vierte Hydromotor 10 ausschließlich mit der zweiten Hydropumpe 5 verbunden. Die erste Hydropumpe 4 bildet mit dem Hydromotor 8 ebenso wie die zweite Hydropumpe mit dem vierten Hydromotor einen konventionellen Kreislauf.

Auch bei einer Umkehrung der Förderrichtung, bei der durch die erste bzw. zweite Hydropumpe 4, 5 Druckmittel in die zweite bzw. vierte Arbeitsleitung 13, 17 gefördert wird, bleibt die teilweise Kreuzschaltung erhalten. Es sind jeweils der erste Hydromotor 7 und der zweite Hydromotor 8 in einer Kreuzschaltung mit beiden Hydropumpen 4, 5 verbunden, wohingegen die beiden Hydromotoren 9, 10 jeweils nur mit je einer der beiden Hydropumpen 4, 5 verbunden sind.

In dem dargestellten Ausführungsbeispiel sind der erste Hydromotor 7 und der zweite Hydromotor 8 vorzugsweise der Vorderachse eines Fahrzeugs zugeordnet. So wird durch den ersten Hydromotor 7 zum Beispiel eine vordere rechte Antriebswelle 31 angetrieben. Der Hydromotor 8 treibt dagegen eine vordere linke Antriebswelle 32 an. Der dritte Hydromotor 9 und der vierte Hydromotor 10 sind dagegen mit den angetriebenen Rädern einer Hinterachse eines Fahrzeugs verbunden. So treibt der dritte Hydromotor 9 eine hintere rechte Antriebswelle 33 und der vierte Hydromotor 10 eine hintere linke Antriebswelle 34 an. Ein solcher Fahrantrieb 1 kann beispielsweise als Allradantrieb bei einem Bagger oder einem anderen mobilen Arbeitsgerät eingesetzt werden.

Da bei dem erfindungsgemäßen hydrostatischen Fahrantrieb jeweils der Förderstrom der ersten Hydropumpe 4 bzw. der Förderstrom der zweiten Hydropumpe 5 aufgeteilt wird, wobei ein Teil des geförderten Druckmittels wieder zurück zu der jeweiligen Hydropumpe 4, 5 fließt, ist eine begrenzt flexible Ölmengenbilanz möglich. Zwar sind die beiden Antriebsstränge nach wie vor durch die Kreuzverschaltung des ersten Hydromotors 7 sowie des zweiten Hydromotors 8 miteinander gekoppelt, woraus sich eine Differenzialsperrwirkung ergibt, jedoch ist die Koppelung nicht so starr wie bei einer vollständigen Kreuzverschaltung aller beteiligten Hydromotoren. Dies führt dazu, dass die einzelnen Hydromotoren in ihrem Schluckvolumen voneinander abweichen können. Damit wird der Einsatz des hydrostatischen Fahrantriebs mit einer lastdruckabhängigen Verstellung der Hydromotoren möglich.

Selbst dann, wenn sämtliche Hydromotoren 7 - 10 als Konstantmotoren ausgeführt sind, ergibt sich ein Vorteil, da die Grundeinstellung der Hydromotoren 7 - 10 nicht eine absolute Identität zwischen den einzelnen Schluckvolumen herstellen muss. Bevorzugt werden jedoch zumindest paarweise Schaltmotoren oder Verstellmotoren als Hydromotoren verwendet. So können beispielsweise die Hydromotoren 9 und 10 der Hinterachse als Schaltmotoren oder Verstellmotoren ausgeführt sein. Selbstverständlich können auch die beiden Hydromotoren 7 und 8, die in dem dargestellten Ausführungsbeispiel der Vorderachse zugeordnet sind, als Schalt- oder Verstellmotoren ausgeführt sein.

Die Zuordnung der beiden kreuzverschalteten Hydromotoren 7 und 8 zu der Vorderachse ist lediglich für das dargestellte Ausführungsbeispiel gewählt und nicht zwingend. Ebensogut könnte beispielsweise das vordere rechte Rad durch den ersten Hydromotor 7 und das hintere linke Rad durch den zweiten Hydromotor 8 angetrieben sein. Dementsprechend wäre dann das rechte hintere Antriebsrad durch den dritten Hydromotor 9 und das linke vordere Antriebsrad durch den vierten Hydromotor 10 angetrieben. In einer weiteren alternativen Ausführungsform treibt der erste Hydromotor 7 das rechte Vorderrad, der zweite Hydromotor 8 das rechte Hinterrad, der dritte Hydromotor 9 das linke Vorderrad und der vierte Hydromotor 10 das linke Hinterrad an.

Um einen bestimmten Mindestdruck in dem System zu erzeugen, das bei Inbetriebnahme zunächst drucklos ist, ist ein Speisesystem vorgesehen. Das Speisesystem umfasst die Speisepumpe 6, die ebenfalls durch die Antriebsmaschine 2 angetrieben wird. Die Speisepumpe 6 saugt über eine Saugleitung 35 aus einem Tankvolumen 36 Druckmittel an und fördert es in eine Speisedruckleitung 37. Um einen Druckanstieg in der Speisedruckleitung 37 über einen bestimmten Wert zu verhindern, ist mit der Speisedruckleitung 37 ein Speisedruckbegrenzungsventil 38 verbunden. Das Speisedruckbegrenzungsventil ist in Richtung einer geschlossenen Position durch eine einstellbare Feder 39 mit einer Federkraft beaufschlagt. Entgegen der Kraft der einstellbaren Feder 39 wirkt auf das Speisedruckbegrenzungsventil 38 an einer Messfläche der über eine Speisedruckmessleitung 40 zugeführte Druck der Speisedruckleitung 37. Übersteigt die an der Messfläche wirkende hydraulische Kraft die Kraft der entgegengerichtet wirkenden Feder, so wird das Speisedruckbegrenzungsventil 38 in Richtung seiner geöffneten Position verstellt, so dass die Speisedruckleitung 37 über eine Entspannungsleitung 41 mit dem Tankvolumen 36 verbunden ist. Oberhalb einer bestimmten Mindestdrehzahl wird so durch die Speisepumpe 6 ein konstanter Druck im Speisesystem aufrecht erhalten. Ein auf Grund eines Drehzahlanstiegs der Antriebsmaschine 2 weiter ansteigender Druck wird durch das Speisedruckbegrenzungsventil 38 und die zunehmende Verbindung der Speisedruckleitung 37 mit dem Tankvolumen 36 verhindert.

Die Speisedruckleitung 37 ist an ihrem von der Speisepumpe 6 abgewandten Ende mit einer ersten Verbindungsleitung 42 sowie einer zweiten Verbindungsleitung 43 verbunden. Die erste Verbindungsleitung 42 erstreckt sich von der ersten Arbeitsleitung 11 zu der zweiten Arbeitsleitung 13. Die zweite Verbindungsleitung 43 erstreckt sich von der dritten Arbeitsleitung 15 zu der vierten Arbeitsleitung 17.

Zwischen der Ausmündung der Speisedruckleitung 37 in die erste Verbindungsleitung 42 und der ersten Arbeitsleitung 11 ist in der ersten Verbindungsleitung 42 eine erste Speiseventileinheit 44 angeordnet. Die erste Speiseventileinheit 44 weist ein in Richtung auf die erste Arbeitsleitung 11 hin öffnendes Rückschlagventil 45 auf. Über das Rückschlagventil 45 ist ein Bedrücken der ersten Arbeitsleitung 11 aus der Speisedruckleitung 37 möglich, solange der Druck in der Speisedruckleitung 37 den Druck in der ersten Arbeitsleitung 11 übersteigt.

Zur Absicherung der ersten Arbeitsleitung 11 ist parallel zu dem Rückschlagventil 45 ein Hochdruckbegrenzungsventil 46 angeordnet. Über das Hochdruckbegrenzungsventil 46 ist in der ersten Verbindungsleitung 42 eine durchströmbare Verbindung in Schließrichtung des Rückschlagventils 45 herstellbar. Das Hochdruckbegrenzungsventil 46 ist hierzu durch eine Feder 47 in Schließrichtung vorgespannt, wobei entgegengesetzt der Kraft der Feder 47 auf eine Messfläche des Hochdruckbegrenzungsventils 46 eine hydraulische Kraft wirkt. Die hydraulische Kraft wird durch einen über eine Arbeitsdruckmessleitung 48 zugeführten Druck der ersten Arbeitsleitung 11 erzeugt. Übersteigt nun der in der ersten Arbeitsleitung 11 herrschende Druck einen kritischen, durch die Feder 47 festgelegten Wert, so öffnet das Hochdruckbegrenzungsventil 46 und Druckmittel kann aus der ersten Arbeitsleitung 11 unter Umgehung des Rückschlagventils in Richtung der Speisedruckleitung 37 abfließen.

Wird dabei in der Speisedruckleitung 37 ein Druck erzeugt, der höher ist als der maximale, durch das Speisedruckbegrenzungsventil 38 vorgegebene Speisedruck, so wird die erste Arbeitsleitung 11 in das Tankvolumen 36 entspannt.

Zwischen der zweiten Arbeitsleitung 13 und der Ausmündung der Speisedruckleitung 37 in die erste Verbindungsleitung 42 ist eine entsprechende zweite Speiseventileinheit 49 angeordnet. Die zweite Speiseventileinheit 49 ist entsprechend der ersten Speiseventileinheit 44 aufgebaut, so dass auf eine erneute Beschreibung der Funktion der Elemente verzichtet werden kann. Liegt der Druck in der zweiten Arbeitsleitung 13 unterhalb des in der Speisedruckleitung 37 herrschenden Drucks, so kann auch das aus der ersten Arbeitsleitung 11 entnommene Druckmittel über ein Rückschlagventil der zweiten Speiseventileinheit 49 in die zweite Arbeitsleitung 13 abgeführt werden.

Auch zum Befüllen der dritten Arbeitsleitung 15 bzw. vierten Arbeitsleitung 17 sowie zu deren Druckabsicherung sind in der zweiten Verbindungsleitung 42 zu beiden Seiten der Ausmündung des Speisedruckbegrenzungsventils 37 in die zweite Verbindungsleitung 43 eine entsprechende dritte Speiseventileinheit 50 sowie eine vierte Speiseventileinheit 51 vorgesehen. Die dritte Speiseventileinheit 50 sowie die vierte Speiseventileinheit 51 entsprechen in Aufbau und Funktion der ersten Speiseventileinheit 44 und der zweiten Speisventileinheit 49. Es wird daher, um unnötige Wiederholungen zu vermeiden, auf eine erneute Beschreibung der dritten und vierten Speiseventileinheit 50,51 verzichtet.

Der erfindungsgemäße hydrostatische Fahrantrieb ist nicht auf die beschriebenen Ausführungsbeispiele beschränkt. Vielmehr ist es möglich, die einzelnen Merkmale der beschriebenen Ausführungsbeispiele untereinander beliebig zu kombinieren.

## Patentansprüche

1. Hydrostatischer Fahrantrieb mit zumindest einer ersten Hydropumpe (4) und einer zweiten Hydropumpe (5) und einem ersten, einem zweiten, einem dritten und einem vierten Hydromotor (7, 8, 9, 10), wobei
jeder Hydromotor jeweils über genau zwei Arbeitsanschlüsse verfügt und wobei ein erster Anschluss (12) der ersten Hydropumpe (4) mit einem ersten Anschluss (19) des ersten Hydromotors (7) und einem ersten Anschluss (20) des dritten Hydromotors (9) verbunden ist und ein erster Anschluss (16) der zweiten Hydropumpe (5) mit einem ersten Anschluss (26) des zweiten Hydromotors (8) und einem ersten Anschluss (27) des vierten Hydromotors (10) verbunden ist und dass ein zweiter Anschluss (22) des ersten Hydromotors (7) und ein zweiter Anschluss (29) des vierten Hydromotors (10) mit einem zweiten Anschluss (18) der zweiten Hydropumpe (5) verbunden ist, **dadurch gekennzeichnet,**
**dass** jeder Hydromotor (7, 8, 9, 10) jeweils eine separate Antriebswelle (31, 32, 33, 34) alleine antreibt und
**dass** ein zweiter Anschluss (28) des zweiten Hydromotors (8) und ein zweiter Anschluss (23) des dritten Hydromotors (9) mit einem zweiten Anschluss (14) der ersten Hydropumpe (4) verbunden ist und
**dass** der dritte Hydromotor (9) nur mit der ersten Hydropumpe (4) verbunden ist und einen konventionellen geschlossenen Kreislauf bildet und,
**dass** der vierte Hydromotor (10) nur mit der zweiten Hydropumpe (5) verbunden ist und einen konventionellen geschlossenen Kreislauf bildet.

2. Hydrostatischer Fahrantrieb nach Anspruch 1,
**dadurch gekennzeichnet,**
**dass** der erste und der zweite Hydromotor (7, 8) einer Fahrzeugachse zugeordnet sind.

3. Hydrostatischer Fahrantrieb nach Anspruch 1 oder 2,
**dadurch gekennzeichnet,**
**dass** der dritte und der vierte Hydromotor (9, 10) einer Fahrzeugachse zugeordnet sind.

4. Hydrostatischer Fahrantrieb nach Anspruch 1,
**dadurch gekennzeichnet,**
**dass** der erste und der zweite Hydromotor (7, 8) einer Fahrzeugseite zugeordnet sind.

5. Hydrostatischer Fahrantrieb nach Anspruch 1 oder 4,
**dadurch gekennzeichnet,**
**dass** der dritte und der vierte Hydromotor (9, 10) einer Fahrzeugseite zugeordnet sind.

6. Hydrostatischer Fahrantrieb nach einem der Ansprüche 1 bis 5,
**dadurch gekennzeichnet,**
**dass** der erste und der zweite Hydromotor (7, 8) Konstantmotoren oder Schaltmotoren oder Verstellmotoren sind.

7. Hydrostatischer Fahrantrieb nach einem der Ansprüche bis 6,
**dadurch gekennzeichnet,**
**dass** der dritte und der vierte Hydromotor (9, 10) Konstantmotoren oder Schaltmotoren oder Verstellmotoren sind.

## Claims

1. Hydrostatic travel drive having at least a first hydraulic pump (4) and a second hydraulic pump (5) and a first, a second, a third and a fourth hydraulic motor (7, 8, 9, 10),
each hydraulic motor having precisely two operational connections and a first connection (12) of the first hydraulic pump (4) being connected to a first connection (19) of the first hydraulic motor (7) and a first connection (20) of the third hydraulic motor (9), and
a first connection (16) of the second hydraulic pump (5) being connected to a first connection (26) of the second hydraulic motor (8) and a first connection (27) of the fourth hydraulic motor (10),
**characterised in that**
each hydraulic motor (7, 8, 9, 10) drives a separate drive shaft (31, 32, 33, 34) alone and
**in that** a second connection (22) of the first hydraulic motor (7) and a second connection (29) of the fourth hydraulic motor (10) is connected to a second connection (18) of the second hydraulic pump (5) and
**in that** a second connection (28) of the second hydraulic motor (8) and a second connection (23) of the third hydraulic motor (9) are connected to a second connection (14) of the first hydraulic pump (4) and
**in that** the third hydraulic motor (9) is connected only to the first hydraulic pump (4) and forms a conventional closed circuit and
**in that** the fourth hydraulic motor (10) is connected only to the second hydraulic pump (5) and forms a conventional closed circuit.

2. Hydrostatic travel drive according to claim 1,
**characterised in that**
the first and the second hydraulic motor (7, 8) are associated with a vehicle axle.

3. Hydrostatic travel drive according to claim 1 or 2,
**characterised in that**
the third and the fourth hydraulic motor (9, 10) are associated with a vehicle axle.

4. Hydrostatic travel drive according to claim 1,
**characterised in that**
the first and the second hydraulic motor (7, 8) are associated with a vehicle side.

5. Hydrostatic travel drive according to claim 1 or 4,
**characterised in that**
the third and the fourth hydraulic motor (9, 10) are associated with a vehicle side.

6. Hydrostatic travel drive according to any one of claims 1 to 5,
**characterised in that**
the first and the second hydraulic motor (7, 8) are fixed displacement motors or switch motors or variable displacement motors.

7. Hydrostatic travel drive according to any one of claims 1 to 6,
**characterised in that**
the third and the fourth hydraulic motor (9, 10) are fixed displacement motors or switch motors or variable displacement motors.

## Revendications

1. Système d'entraînement hydrostatique comprenant au moins une première pompe hydraulique (4) et une seconde pompe hydraulique (5), et un premier, un second, un troisième, et un quatrième moteurs hydrauliques (7, 8, 9, 10), dans lequel chaque moteur hydraulique dispose respectivement exactement de deux raccords de travail, et dans lequel un premier raccord (12) de la première pompe hydraulique (4) est relié à un premier raccord (19) du premier moteur hydraulique (7) et à un premier raccord (20) du troisième moteur hydraulique (9), et un premier raccord (16) de la seconde pompe hydraulique (5) est relié à un premier raccord (26) du second moteur hydraulique (8) et à un premier raccord (27) du quatrième moteur hydraulique (10),
**caractérisé en ce que** chaque moteur hydraulique (31, 32, 33, 34) entraîne respectivement un seul arbre de transmission séparé (31, 32, 33, 34), et
**en ce qu'**un second raccord (22) du premier moteur hydraulique (7) et un second raccord (29) du quatrième moteur hydraulique (10) sont reliés à un second raccord (18) de la seconde pompe hydraulique (5),
**en ce qu'**un second raccord (28) du second moteur hydraulique (8) et un second raccord (23) du troisième moteur hydraulique (9) sont reliés à un second raccord (14) de la première pompe hydraulique (4),
**en ce que** le troisième moteur hydraulique (9) est relié seulement à la première pompe hydraulique (4) et forme un circuit fermé classique, et
**en ce que** le quatrième moteur hydraulique (10) est relié seulement à la seconde pompe hydraulique (5) et forme un circuit fermé classique.

2. Système d'entraînement hydrostatique selon la revendication 1,
**caractérisé en ce que** le premier et le second moteurs hydrauliques (7, 8) sont affectés à un essieu du véhicule.

3. Système d'entraînement hydrostatique selon la revendication 1 ou 2,
**caractérisé en ce que** le troisième et le quatrième moteurs hydrauliques (9, 10) sont affectés à un essieu du véhicule.

4. Système d'entraînement hydrostatique selon la revendication 1,
**caractérisé en ce que** le premier et le second moteurs hydrauliques (7, 8) sont affectés à un côté du véhicule.

5. Système d'entraînement hydrostatique selon la revendication 1 ou 4,
**caractérisé en ce que** le troisième et le quatrième moteurs hydrauliques (9, 10) sont affectés à un côté du véhicule.

6. Système d'entraînement hydrostatique selon l'une des revendications 1 à 5,
**caractérisé en ce que** le premier et le second moteurs hydrauliques (7, 8) sont des moteurs à cylindrée constante ou des moteurs avec réducteurs ou des moteurs à cylindrée variable.

7. Système d'entraînement hydrostatique selon l'une des revendications 1 à 6,
**caractérisé en ce que** le troisième et le quatrième moteurs hydrauliques (9, 10) sont des moteurs à cylindrée constante ou des moteurs avec réducteurs ou des moteurs à cylindrée variable.
